# EUROPÄISCHE PATENTSCHRIFT

(11) **EP 1 206 879 B1**
(45) Veröffentlichungstag und Bekanntmachung des Hinweises auf die Patenterteilung: **12.01.2005**
(21) Anmeldenummer: 00960400.0
(22) Anmeldetag: 07.08.2000
(51) Int. Cl.: H04N 7/173

(54) **ZENTRALER KINO-SERVER**
CENTRAL CINEMA SERVER
SERVEUR CENTRAL DE CINEMA

(30) Priorität: 06.08.1999 DE 19936720
(43) Veröffentlichungstag der Anmeldung: 22.05.2002
(60) Teilanmeldung: 04023923.8
(73) Patentinhaber: CAG-Cinema Advertising Group GmbH, 90763 Fürth (DE)
(72) Erfinder: KRIETE, Harald, 21339 Lüneburg (DE); JÜNKERING, Walter, 50670 Köln (DE)
(74) Vertreter: Neidl-Stippler, Cornelia, Dr.
(86) Internationale Anmeldenummer: PCT/EP2000/007636
(87) Internationale Veröffentlichungsnummer: WO 2001/011884

(56) Entgegenhaltungen:
- EP-A- 0 656 728
- WO-A-99/59335
- VAITZBLIT L: "A HIGH-RESOLUTION VIDEO SERVER FOR CINEMA OF THE FUTURE" IEEE MULTIMEDIA,US,IEEE COMPUTER SOCIETY, Bd. 2, Nr. 3, 21. September 1995 (1995-09-21), Seiten 65-69, XP000529093 ISSN: 1070-986X

## Beschreibung

Die Erfindung betrifft ein Verfahren zur zentralen Organisation der Vorstellung von digitalisierten Werbefilmsequenzen oder Einzelbildern in mehreren Filmtheatern, die jeweils mit einem Videoprojektor ausgestattet sind, sowie ein System zu seiner Durchführung.

Bislang werden Kinofilme und Werbeclips als Filmrollen an die einzelnen Filmtheater verschickt und dort mit einem analogen Projektor vorgeführt. Die Digitalisierung und damit die Möglichkeit der Vorführung mittels modemer Videoprojektoren schreitet jedoch immer weiter voran. Nachdem heute Videoprojektoren mit ausreichender Lichtstärke erhältlich sind, werden schon erste Kinofilme für die Vorführung auf diesen Geräten digitalisiert. Die Darbietung digitalisierter Filme wurde schon erprobt und hat sich bewährt. Der digitalisierte Film ist vom analogen kaum noch zu unterscheiden.

Dennoch funktioniert jedoch die Vorführung von Filmen und insbesondere von Werbefilmen bislang nach dem bekannten Schema. Danach kann ein Kunde, also ein Anbieter von Waren oder Dienstleistungen, die Präsentation seines Werbespots in einem Kino buchen. Dieser Werbespot wird dann meist von einer Zentrale mit anderen Werbespots für die Vorführung in einem speziellen Kino zusammengeschnitten und dem Kino zur Verfügung gestellt. Diese Aufarbeitung beinhaltet eine Vielzahl von Schritten von der Idee bis zur Umsetzung. Zudem müssen die Filme kopiert und einzeln an die Kinos verschickt werden. Da die herkömmlichen Filme nur für eine begrenzte Anzahl von Vorführungen taugen, müssen wiederholt Kopien der Filme den Kinos zur Verfügung gestellt werden, um eine gleichbleibende Qualität zu gewährleisten. Die wiederholten Kopien und deren Versand gehen dabei mit erheblichen Kosten einher.

Vaitzblit schlägt vor (IEE Computer Society, Vol. 2, Nr. 3, 21. Sept. 1995, S. 65-69) das gesamte Filmmaterial gemeinsam mit dem Werbefilm zu digitalisieren und die digitalen Daten zu projizieren. Aufgrund der grossen Datenmengen stellt dieser Vorschlag sehr hohe Auforderungen anspeicherkapazität und Datenübermittlung und bedingt eine aufwendige Anlage.

EP-A-0 656 728 übermittelt Videos an Fernsehkunden gemeinsam mit Werbung eine Sicherkeit, dass die Werbung vom Zuschauer angesehen wird, ist nicht gegeben. Außerdem ist es besonders nachteilig, daß die einzelnen Sequenzen nicht kurzfristig an einen möglicherweise wechselnden Bedarf angepaßt werden können, Insbesondere ist es beispielsweise nicht möglich, den Preis für ein bestimmtes über einen Werbeciip beworbenes Produkt kurzfristig zu aktualisieren. Obwohl die Werbefilme vorhanden sind, ist die Vorlaufzeit für Aktualisierungen unbefriedigend lang. Die komplizierte Logistik bis zur endgültigen Darbietung eines Werbeclips bietet dabei eine große Fehlerquelle.

Aufgabe der vorliegenden Erfindung ist es daher, ein Verfahren zur schaffen, das Werbefilme, mit gleichbleibend hoher Qualität, mit geringen Aufwand zu vorherbestimmten zeiten in ausgewählten Filmtheatern vorzuführen erlaubt.

Diese Aufgabe wird durch das Verfahren nach dem Anspruch 1 gelöst.

Ausgehend von digitalisierten Werbe Filmen, Werbe Filmsequenzen oder Standbildern bietet das erfindungsgemäße Verfahren, das sich eines zentralen Rechners -zentralen Kino-Servers - bedient, für Filmvorführungen in Kinos insbesondere für die Darbietung von Werbespots eine Vielzahl von Vorteilen. So bleiben die digitalisierten Filme trotz vieler Vorführungen von gleichbleibender Qualität. Das wiederholte Kopieren und das Verschicken der Kopien entfällt, was zu einer erheblichen Senkung der Kosten und des logistischen Aufwandes beiträgt. Außerdem ist mindert die zentralisierte Organisation die Fehler bei der Ausstrahlung in den einzelnen Kinos, da es keiner manuellen Montage der Filme durch einen Vorführer mehr bedarf. Gleichzeitig ist eine optimale Kontrolle des Werbeveranstalters über die Anzahl der Ausstrahlungen und somit eine leistungsgerechte Abrechnung gegenüber dem Auftraggeber gewährleistet.

Ein großer Vorteil, der sich wiederum besonders auf dem Gebiet der Werbefilme bemerkbar macht, ist die hohe Aktualität der einzelnen Spots. So ist es durch den zentralen Kinoserver möglich, die Inhalte der Spots, beispielsweise die Preise von Artikeln, innerhalb kürzester Zeit nach Bedarf zu ändern und aktuell in den Kinos darzubieten. Das erfindungsgemäße Verfahren zeichnet sich somit durch eine kurze Vorlaufzeit aus. Auch die für einzelne Kinos individuell zusammengestellten Werbeblöcke werden durch die zentrale Organisation von immer denselben besonders qualifizierten Fachleuten zusammengestellt. so daß die Qualität aller Werbeblöcke jederzeit gewährleistet ist. Es können dabei die Werbespots global auftretender Firmen individuell mit den Spots lokal ansässiger Geschäfte kombiniert und so der gesamte Werbeblock ständig verändert werden. Die Abfolge der Spots kann den Tageszeiten und damit dem Publikumsbedarf optimal angepaßt werden, was zu einer hohen Akzeptanz der Werbung und damit zu einer großen Wirksamkeit führt. Die Übertragung der Werbe-Filmsequenzen erfolgt in vorteilhafter Weise über ein Datenleitungsnetz (Kabel, Funk oder Satellit) von einer Zentrale (Point) zu den einzelnen Filmtheatern (Multipoint), so daß ein gesendeter Clip von allen Filmtheatern gleichzeitig empfangen werden kann.

Ein grundlegender Gedanke des zentralen Kino-Servers ist, daß jedem der angeschlossenen Filmtheater eine individuelle Liste wie ein Spielplan (Play-List) zugeordnet wird, auf der die Abfolge der einzelnen Filmsequenzen verzeichnet ist. Diese Play-List ist eine Datei, In der beispielsweise das Fimtheater, das Spieldatum, die Uhrzeit und dann die Liste der Filme mit Verweisen auf den tatsächlichen Speicherplatz der entsprechenden Daten gespeichert ist. Die Listen vieler Filmtheater konnen in dem zentralen Kino-Server niedergelegt und von diesem abgearbeitet werden. Der zentrale Kino-Server hat somit jederzeit die vollständige Kontrolle über den Ablauf der Filme und kann eine genaue Dokumentation betreiben. Über die Kontrolle durch die Play-Lists kann unzulässige Werbung, beispielsweise Zigarettenwerbung in Zeichentrickfilmen, unterbunden werden.

Für die Ausführung der Play-Listen, d.h. für die Übertragung der Werbe-Filme zu den dezentral in den Kinos befindlichen Videoprojektoren und damit zur Vorführung, gibt es verschiedene Möglichkeiten. So ist es beispielsweise möglich, die Versorgung der Videoprojektoren direkt vom zentralen Rechner vorzunehmen. Dazu werden die digitalen Daten vom zentralen Rechner an den Projektor übertragen und dieser setzt sie aktuell in Bilder um.

Eine andere zu bevorzugende Möglichkeit bedient sich dezentral in den Kinos aufgestellter Rechner, die zur Steuerung der Videoprojektoren eingesetzt werden. In dieser Art brauchen lediglich die fertigen Play-Listen vom zentralen an den dezentralen Rechner übertragen werden, der die Play-Listen abarbeitet. Die dazu nötigen Filme können schon vorher auf den dezentralen Rechner übertragen worden sein, bzw. diesem zur Verfügung stehen, oder er ruft sie bei Bedarf vom zentralen Rechner ab. Diese Art der zentralen Organisation bietet den einzelnen Kinos eine größere Flexibilität und Eigenständigkeit. Die digitale Information vom zentralen auf die dezentralen Rechner wird dabei vorteilhafterweise über Datennetze via Leitung oder Satellit übertragen. Wegen der Sicherheit der Daten ist es vorteilhaft, die Daten bei der Übertragung zu kodieren. Werbefilme oder andere immer wiederkehrende Filmsequenzen können den dezentralen Rechnern aber auch auf CD-Roms zur Verfügung gestellt werden, was ebenfalls eine erhöhte Datensicherheit gewährleisten kann.

Da es für die Einspeisung und Übertragung der großen Datenmengen umfangreicher technischer Voraussetzungen bedarf, ist es vorteilhaft, sich einer vorhandenen Sendestation als Zwischenstation zu bedienen. Solche Sendestationen sind von Radio und Fernsehsendern bekannt und verfügen über die nötigen Anlagen. Zu den Sendestationen werden die Play-Listen und die Werbe-Filmsequenzen vorteilhafterweise ebenfalls via digitaler Datenleitung übermittelt. Somit ist dem zentralen und dem dezentralen Rechner ein weiterer Rechner zwischengeschaltet. Auf diesem Rechner kann vorteilhafterweise eine Datei mit einer großen Anzahl von Werbe-Filmsequenzen gespeichert sein.

Vorteilhafterweise werden die Play-Listen separat von einer eigens dafür vorgesehenen Agentur erstellt, die im direkten Kontakt zum Auftraggeber für die Werbung steht. Die Play-Listen werden dann von der Agentur dem Zentralen Kino-Server übermittelt.

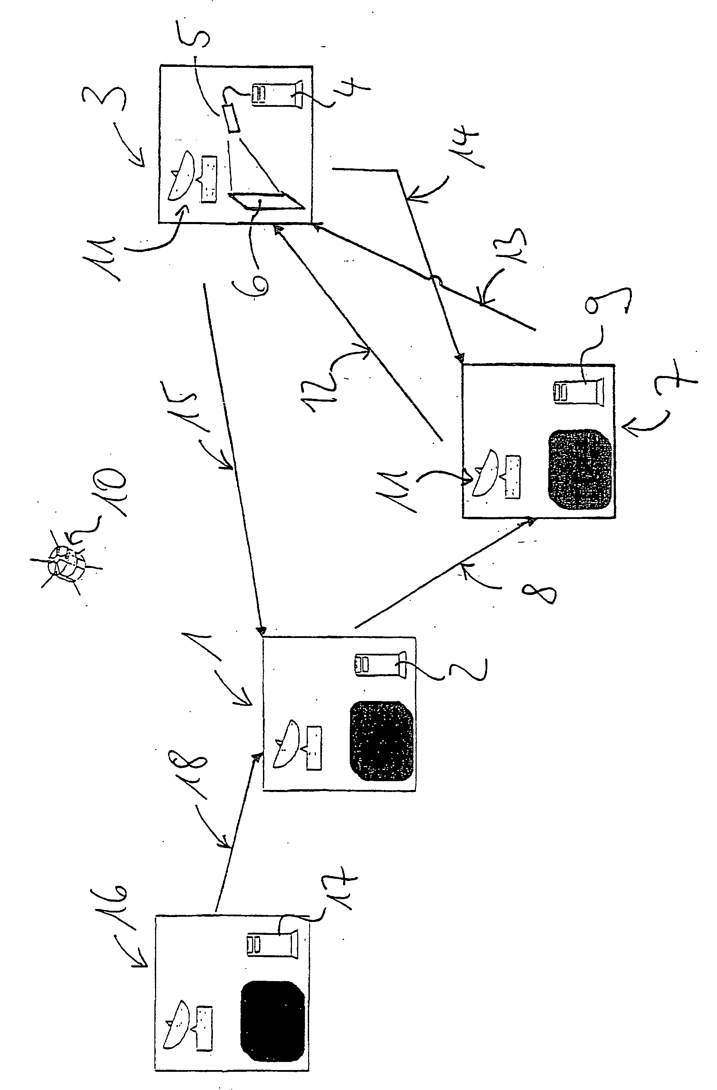

Eine besondere Ausführungsform des erfindungsgemäßen Verfahrens wird anhand des in der Figur gezeigten Schaubildes nachfolgend erklärt.

Das Schema zeigt vier verschiedene Einrichtungen, wobei die Einrichtung 1 den Standort des Zentralen Kinoservers mit dem Rechner 2 markiert. Eines von einer möglicherweise großen Anzahl von Filmtheatern ist durch die Einrichtung 3 symbolisiert, die ihrerseits einen dezentralen Rechner 4 aufweist. Der kinoeigene dezentrale Rechner 4 steuert den Ablauf eines angeschlossenen Videoprojektors 5, mit dem in digitalen Daten vorliegende Werbe-Filme bzw. Werbe-Filmsequenzen auf eine Kinoleinwand 6 projiziert werden können.

In der Einrichtung 1 mit dem Zentralen Kinoserver werden in diesem Ausführungsbeispiel die den einzelnen Kinos 3 zugeordneten Play-Listen als digitale Dateien erstellt, die Hinweise auf eine Abfolge von Werbe-Filmsequenzen enthalten, wobei als Hinweise Verweise auf den Werbe-Filmen zugeordnete Datensätze (Pointer) oder auch vollständige Werbe-Filmsequenzen zu verstehen sind. Die Play-Listen beinhalten somit entweder einen Verweis auf den Speicherplatz der vollständigen Information oder die vollständige Information selbst. Dies Play-Listen sind für mehrere Filmtheater 3 auf dem zentralen Rechner 2 gespeichert.

Die Wiedergabe der digitalen Information in einem einzelnen Kino 3 erfolgt dann derart, daß der Ablauf der Werbe-Filmsequenzen, insbesondere der Werbespots, auf dem Videoprojektor 5 des jeweiligen Filmtheaters 3 von dem zentralen Rechner 2 gesteuert wird. Die Play-Listen und die digitalisierten Werbe-Filmsequenzen sind auf dem zentralen Rechner 2 gespeichert. Im vorliegenden Fall werden die Daten zunächst einer Zwischenstation 7 auf dem Weg 8 übermittelt, wobei die Zwischenstation 7 ein mit professioneller Sendetechnik und ebenfalls mit einem Rechner 9 ausgestatteter Fernsehsender ist. Die Datenübertragung auf den einzelnen Wegen erfolgt in diesem Ausführungsbeispiel via Satellit 10, wobei die Sendung und der Empfang von den Bodenstationen 1, 3 und 7 mittels Satellitenantennen 11 bewerkstelligt wird. Von der Zwischenstation aus werden die Daten dem Kino 3 auf den Wegen 12 und 13 übermittelt, wobei der dezentrale Rechner 4 bei Bedarf Daten über den Weg 14 anfordern kann.

Die Organisation, d.h. die Erstellung und die Anfertigung der Filmsequenzen anhand der Play-Listen erfolgt in der Einrichtung 1, die über eine Datenleitung 15 in direkter Verbindung mit dem Kino steht. Über diese Datenleitung 15 gibt das Kino 3 die Rückmeldung der ausgestrahlten Werbe-Filme. Somit ist eine Kontrolle der Vorführungen und damit eine leistungsgerechte Abrechnung gegenüber den Werbekunden garantiert. Im vorliegenden Ausführungsbeispiel werden die reinen Play-Listen von einer Einrichtung 16 auf einem separaten Rechner 17 erstellt, wobei die Einrichtung 16 mit den Werbekunden in direktem Kontakt steht. Die Einrichtung 16 steht ebenfalls via Satellit über die Leitung 18 mit dem Zentralen Kinoserver in Verbindung.

## Patentansprüche

1. Verfahren zur zentralen Organisation der Vorstellung digitalisierter Werbefilmsequenzen oder Einzelbilder in mehreren Filmtheatern, die jeweils mit einem Videoprojektor ausgestattet sind, **dadurch gekennzeichnet, dass**
- jeweils einem Filmtheater (3) eine individuelle Playlist, erstellt von einer dafür vorgesehenen Agentur, die im direkten Kontakt zum Auftraggeber für die Werbung steht, mit Spieldatum, Uhrzeit, Liste der Werbefilme mit Verweisen auf den tatsächlichen Speicherplatz der entsprechenden Daten zugeordnet wird; in der nach Art eines Spielplans die Abfolge der Werbefilme verzeichnet ist, zugeordnet wird;
- die Playlists für mehrere Filmtheater (3) auf einem zentralen Rechner (2) gespeichert werden,
- ein dezentraler Rechner (4) die Werbefilme in der in der Playlist gespeicherten Ab folge an den digitalen Videoprojektor (5) jedes Filmtheaters (3) übergibt, der die Werbefilmsequenzen projiziert; und
- die leistungsgerechte Abrechnung anhand einer über eine Datenleitung (15) übermittelter Rückmeldung der projizierten Werbefilmsequenzen erfolgt.

2. Verfahren nach Anspruch 1, **dadurch gekennzeichnet, daß** auf dem zentralen Rechner (2) die digitalisierten Werbefilmsequenzen gespeichert sind.

3. Verfahren nach Anspruch 1 oder 2, **dadurch gekennzeichnet, daß** die Playlisten mittels digitaler Datenübertragung an einen in dem jeweiligen Filmtheater befindlichen dezentralen Rechner (4) übermittelt werden, der den digitalen Videoprojektor (5) steuert.

4. Verfahren nach Anspruch 3, **dadurch gekennzeichnet, daß** die Werbefilmsequenzen mit digitaler Datenübertragung an die dezentralen Rechner (4) übermittelt werden.

5. Verfahren nach einem der vorherigen Ansprüche, **dadurch gekennzeichnet, daß** der zentrale Rechner (2) dem dezentralen Rechner (4) auf dessen Anforderung auf der Playlist enthaltene Werbefilmsequenzen übermittelt.

6. Verfahren nach einem der vorherigen Ansprüche, **dadurch gekennzeichnet, daß** die auf dem zentralen Rechner (2) gespeicherten Playlisten und/oder Werbefilmsequenzen an eine zentrale Sendestation (7) übermittelt werden, welche die Daten an die einzelnen Filmtheater (3) überträgt.

7. Verfahren nach einem der vorherigen Ansprüche, **dadurch gekennzeichnet, daß** die Datenübertragung via Satellit (10) geschieht.

8. Verfahren nach einem der vorherigen Ansprüche, **dadurch gekennzeichnet, daß** die Daten kodiert übertragen werden.

## Claims

1. Method for the central organisation of the presentation of digitized advertising film sequences or still frames in a plurality of cinemas that are in each case equipped with a video projector, **characterized in that**
- a respective cinema (3) is assigned an individual play list, created by an agency that is provided for this and is in direct contact with the client for the advertising, with playing date, time of day, list of advertising films with references to the actual storage location of the corresponding data, in which play list the sequence of the advertising films is noted in the manner of a programme;
- the play lists for a plurality of cinemas (3) are stored on a central computer (2),
- a decentralized computer (4) transfers the advertising films in the sequence stored in the play list to the digital video projector (5) of each cinema (3), which projects the advertising film sequences; and
- the billing commensurate with services is effected on the basis of a feedback message of the projected advertising film sequences that is communicated via a data line (15).

2. Method according to Claim 1, **characterized in that** the digitized advertising film sequences are stored on the central computer (2).

3. Method according to Claim 1 or 2, **characterized in that** the play lists are communicated by means of digital data transmission to a decentralized computer (4) which is situated in the respective cinema and controls the digital video projector (5).

4. Method according to Claim 3, **characterized in that** the advertising film sequences are communicated by digital data transmission to the decentralized computers (4).

5. Method according to one of the preceding claims, **characterized in that** the central computer (2) communicates advertising film sequences contained on the play list to the decentralized computer (4) at the request thereof.

6. Method according to one of the preceding claims, **characterized in that** the play lists and/or advertising film sequences stored on the central computer (2) are communicated to a central transmitting station (7) that transmits the data to the individual cinemas (3).

7. Method according to one of the preceding claims, **characterized in that** the data transmission takes place via satellite (10).

8. Method according to one of the preceding claims, **characterized in that** the data are transmitted in coded fashion.

## Revendications

1. Procédé pour l'organisation centrale de la présentation de séquences de films publicitaires numérisés ou d'images individuelles dans plusieurs salles de cinéma qui sont à chaque fois équipées d'un vidéoprojecteur, **caractérisé en ce que**
- une liste de diffusion individuelle, établie par une agence prévue à cet effet, laquelle est en contact direct avec le donneur d'ordre de la publicité, comprenant la date de diffusion, l'heure, la liste des films publicitaires avec des renvois à la zone mémoire réelle des données correspondantes et dans laquelle la chronologie des films publicitaires est enregistrée sous la forme d'un programme est à chaque fois associée à une salle de cinéma (3) ;
- les listes de diffusion destinées à plusieurs salles de cinéma (3) sont enregistrées sur un ordinateur central (2) ;
- un ordinateur décentralisé (4) transmet les films publicitaires dans la chronologie enregistrée dans la liste de diffusion au vidéoprojecteur numérique (5) de chaque salle de cinéma (3) qui projette les séquences de film publicitaire ; et
- la facturation en fonction du travail réalisé est effectuée au moyen d'un retour d'information sur les séquences de films publicitaires projetées transmis par le biais d'une ligne de données (15).

2. Procédé selon la revendication 1, **caractérisé en ce que** les séquences de films publicitaires numérisées sont enregistrées sur l'ordinateur central (2).

3. Procédé selon la revendication 1 ou 2, **caractérisé en ce que** les listes de diffusion sont transmises par transmission numérique des données à un ordinateur décentralisé (4) qui se trouve dans la salle de cinéma correspondante et qui commande le vidéoprojecteur numérique (5).

4. Procédé selon la revendication 3, **caractérisé en ce que** les séquences de films publicitaires sont transmises aux ordinateurs décentralisés (4) par transmission numérique des données.

5. Procédé selon l'une des revendications précédentes, **caractérisé en ce que** l'ordinateur central (2) transmet à l'ordinateur décentralisé (4) à sa demande les séquences de films publicitaires contenues dans la liste de diffusion.

6. Procédé selon l'une des revendications précédentes, **caractérisé en ce que** les listes de diffusion et/ou les séquences de films publicitaires qui sont enregistrées sur l'ordinateur central (2) sont transmises à une station d'émission centrale (7) qui transmet les données à chacune des salles de cinéma (3).

7. Procédé selon l'une des revendications précédentes, **caractérisé en ce que** la transmission de données est effectuée par satellite (10).

8. Procédé selon l'une des revendications précédentes, **caractérisé en ce que** les données sont transmises sous forme codée.
